# DEMANDE DE BREVET EUROPEEN

(11) **EP 4 389 571 A1**
(43) Date de publication de la demande: **26.06.2024**
(21) Numéro de dépôt: 23216075.4
(22) Date de dépôt: 12.12.2023
(51) Int. Cl.: B62H 1/04, B62J 7/04, B62K 13/00, B62M 6/40

(54) **ENGIN DE MOBILITÉ POUR UTILISATION INTÉRIEUR ET EXTÉRIEUR**

(30) Priorité: 20.12.2022 IN 202241074027
(71) Demandeur: VALEO EMBRAYAGES, 80009 Amiens (FR)
(72) Inventeur: NEELAKANTAN, Gopinathan, 600130 CHENNAI (IN); CHINNAMUTHU, Thangavelu, 600130 CEHNNAI (IN)
(74) Mandataire: Valeo Powertrain Systems

(57) **Abrégé**

L'invention concerne un engin de mobilité (1) fonctionnant à la fois avec un moteur (2) électrique et une force motrice musculaire transmise à un système de manivelle tournant autour d'un axe de pédalier (Xp) pour entraîner une roue (3, 3'), caractérisé en ce qu'il comporte des moyens de support pivotant (100).

## Description

La présente invention concerne le domaine des engins de mobilité à assistance électrique, et plus particulièrement un vélo à assistance électrique utilisable en déplacement ou statiquement, en intérieur et en extérieur.

Il est connu aujourd'hui des engins de mobilité à assistance électrique, et par exemple les vélos, fonctionnant à la fois avec un moteur électrique et une force motrice musculaire transmise aux roues par l'intermédiaire d'un système de manivelle tournant autour d'un axe de pédalier qui entraîne la roue arrière.

Ce type d'engin comporte une batterie rechargeable de manière classique avec par exemple un câble de connexion à un réseau électrique.

Après utilisation pour déplacement par exemple en extérieur l'engin est stocké et ne peux pas être utilisé en intérieur.

La présente invention a donc pour objet de pallier un ou plusieurs des inconvénients des dispositifs de l'art antérieur en proposant un engin de mobilité utilisable en déplacement ou statiquement, en extérieur et en intérieur, avec un dispositif de recharge de batterie amélioré.

Pour cela la présente invention propose : à rempli ultérieurement

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'ensemble d'un engin de mobilité selon un des aspects de l'invention pour un premier mode d'utilisation,
- la [Fig. 2] est une vue d'ensemble d'un engin de mobilité selon un des aspects de l'invention pour un deuxième mode d'utilisation,
- la [Fig. 3] est une vue extérieure de l'ensemble de transmission selon l'invention, a) selon une face, b) selon l'autre face,
- la [Fig. 4] est une vue en coupe de l'intérieur du boitier comportant l'ensemble de transmission selon l'invention,
- la [Fig. 5] est une vue en coupe en élévation du dispositif de changement de vitesse selon l'invention,
- la [Fig. 6] est une vue en coupe de l'arbre de l'ensemble de transmission selon l'invention,
- la [Fig. 7] est illustration schématique du procédé de recharge de la batterie selon un mode de réalisation de l'invention.

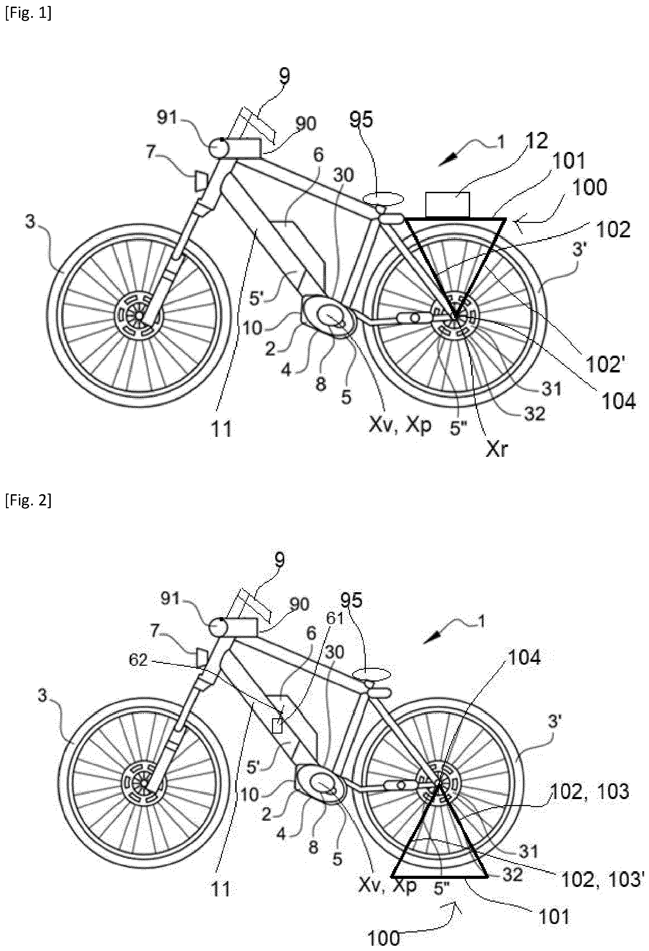

La [Fig. 1] illustre un engin de mobilité 1 selon l'invention. L'engin 1 est ici un vélo à assistance électrique comportant un moteur électrique 2. Le moteur électrique 2 est agencé pour assurer une partie de la propulsion de l'engin.

Selon un mode de réalisation de 'invention, l'engin 1 comporte un moyen 95 d'assise pour l'utilisateur, de type selle, et un moyen de direction 9, de type guidon.

L'engin 1 comporte au moins deux roues 3, 3 'auxquelles est fournie une force motrice, par l'intermédiaire de deux pédales ou équivalent tournant autour d'un axe de pédalier d'axe Xp qui entraîne la roue arrière 3' par exemple par une chaîne, ou tout autre moyen de transmission lors de son utilisation. La roue arrière 3'est celle positionnée à l'opposé du guidon 9, par opposition à la roue avant 3, qui est positionnée au niveau du guidon 9 de l'engin 1 de mobilité.

L'engin 1 comporte également une unité de pilotage 4 ainsi que plusieurs capteurs 5, 5', 5", situés par exemple au niveau du pédalier, sur le cadre 11 de l'engin 1 ou au niveau d'une roue 3, 3'.

L'engin 1 ici représenté comporte également un dispositif de stockage d'énergie sous forme d'une batterie 6, un système d'éclairage 7, un pédalier 8 d'axe Xp, un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

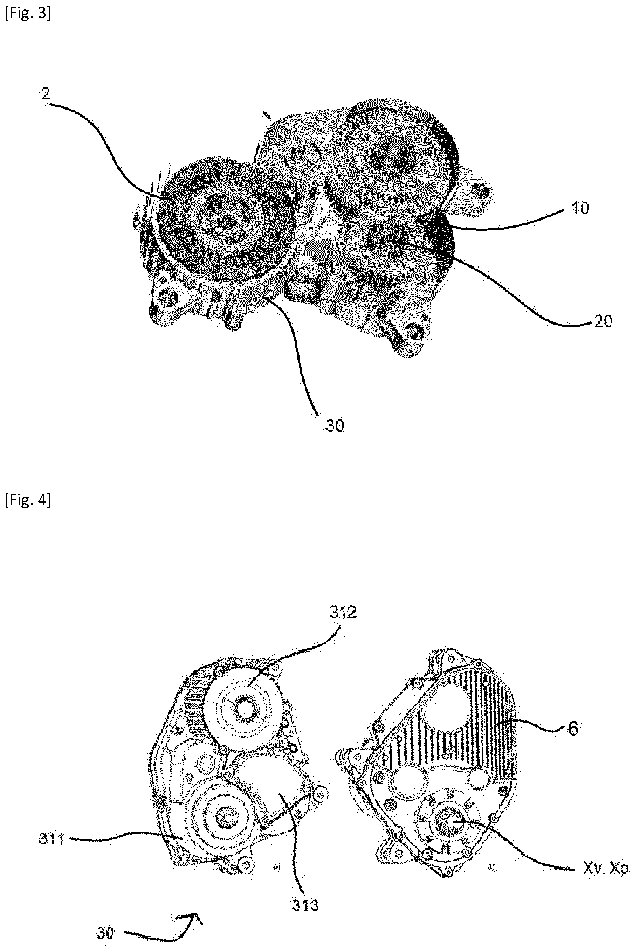

L'engin 1 comporte un ensemble de transmission 10 formé par un dispositif de changement de vitesse 20 et le moteur électrique 2, visible [Fig. 3], pour fournir une partie de la puissance pour la propulsion de l'engin 1.

Selon un mode de réalisation de l'invention, l'ensemble de transmission 10 est au moins en partie logé dans un boîtier 30 fermé par un couvercle 316 (illustré [Fig. 4]) ici positionné au niveau du pédalier 8 dont l'axe Xp est confondu avec l'axe de sortie Xᵥ du dispositif de changement de vitesse 20.

Selon un mode de réalisation de l'invention, le boitier comporte un premier logement 311 agencé pour loger les engrenages du dispositif de changement de vitesse 20 et au moins deux logements 312, 313 distincts l'un de l'autre autres agencés pour loger respectivement le moteur électrique et l'actionneur de changement de vitesse.

Selon un mode de réalisation de l'invention, le boitier 30 est ouvert sur une face.

Selon un mode de réalisation de l'invention, cette face est refermée par un couvercle 316. Selon un mode de réalisation de l'invention, le dispositif de changement de vitesse 20 comporte au moins 2 rapports, et par exemple 7 rapports.

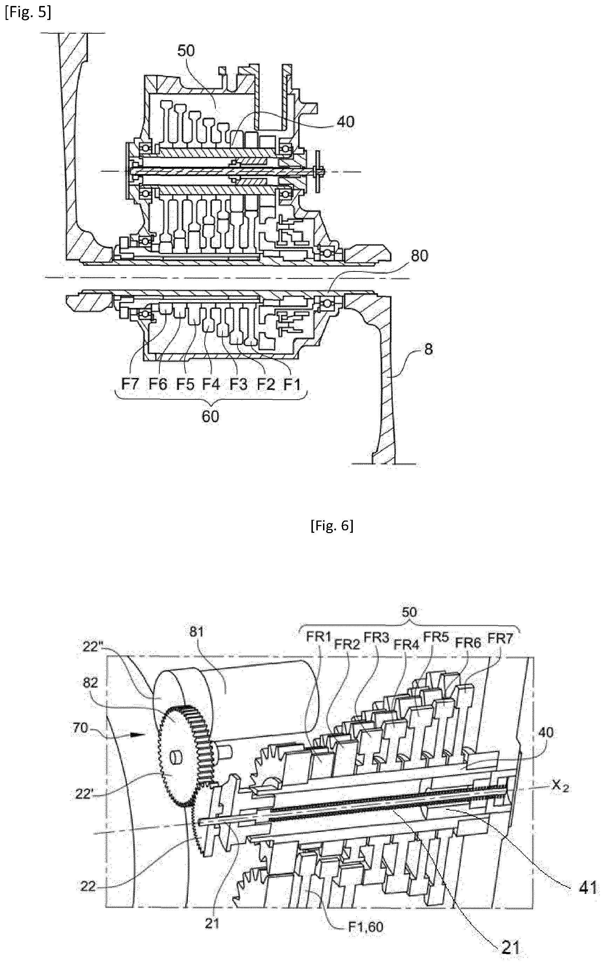

Selon un mode de réalisation de l'invention, illustré [Fig. 5] et [Fig. 6] le dispositif de changement de vitesse 20 comporte une série de sept pignons de sortie 60 d'axe X, de référence F₁ à F₇, solidaires en rotation d'un arbre creux 80 et une série de sept pignons d'entrée 50, de référence FR₁ à FR₇ agencés pour tourner librement autour d'un arbre de sélection 40.

Selon un mode de réalisation de l'invention, l'arbre de sélection 40 illustré [Fig. 6] loge une navette 41 entourant une vis sans fin 21 du dispositif de changement de vitesse 20.

Selon une variante de l'invention, non illustrée, le dispositif de changement de vitesse 20 comporte un train épicycloïdal.

L'engin 1 selon l'invention, comporte un actionneur de changement de vitesse 70 agencé pour déplacer la navette 41 le long de la vis sans fin 21 par une liaison cinématique hélicoïdale, entre au moins 2 positions et par exemple entre 7 positions de P₁ à P₇ et engager un rapport sélectionné.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Selon une variante de réalisation de l'invention, l'actionneur de changement de vitesse 70 a une courroie ou une chaîne ou un cardan ou des pignons.

Le guidage en rotation de la vis sans fin 21 est par exemple assuré à l'aide de roulements à chacune de ses extrémités.

Selon un mode de réalisation de l'invention, lorsqu'une vitesse est sélectionnée la navette 41 est configurée pour, lors de son déplacement, se positionner sous le pignon du rapport sélectionné, et enclencher ce rapport.

Lors de l'utilisation de l'engin en déplacement, la navette 41 permet de sélectionner le rapport choisi qui va enclencher un pignon d'entrée Fri via un cliquet 42.

Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entraînée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée limite à chaque extrémité le déplacement de la navette 41. Selon un autre mode de réalisation de l'invention, le déplacement de la navette est contrôlé par un capteur de position.

Dans le cadre de l'invention, l'engin de mobilité 1 comporte des moyens de support pivotants 100.

Selon un mode de réalisation de l'invention, les moyens de support pivotant 100 sont formés par un porte bagage.

Selon un mode de réalisation de l'invention, les moyens de support 100 sont formés par au moins un cadre de forme rectangulaire, duquel partent au moins 2 barres 102, 103 de fixation disposées de part et d'autres de la roue arrière 3'. Les barres 102, 103 de fixation se prolongent de façon à permettre la fixation des moyens de support 100 au cadre 11 de l'engin 1 de mobilité, au niveau de la roue arrière 3'.

Selon un mode de réalisation de l'invention, les moyens de support 100 comportent 4 barres 102, 102', 103, 103'de fixations disposées 2 par 2 de part et d'autre de la roue arrière 3'. Les 2 barres disposées du même côté de la roue 3' sont fixées au même endroit au niveau de la roue 3', et par exemple sur le cadre 11.

Selon un mode de réalisation de l'invention, les barres sont fixées au cadre 11 de l'engin de mobilité au niveau du centre de la roue 3' arrière.

Les moyens de support pivotants 100 sont ainsi fixés au niveau du centre de la roue arrière 3', de part et d'autre de la roue 3' par l'intermédiaire des barres de fixation. Les moyens de support 100 sont fixés de façon à laisser la roue arrière 3' libre en rotation quel que soit la position des moyens de support pivotants 100.

Selon un mode de réalisation de l'invention, la fixation entre les barres de fixation et le centre de la roue est réalisée avec un élément de fixation 101 permettant la rotation des moyens de support pivotant 100 autour de la roue arrière 3'. Plus précisément, les moyens de support 100 sont déplaçables en rotation autour de l'axe Xr de la roue arrière 3' pour passer d'une position où ils sont disposés au-dessus de la roue arrière 3' à une position au-dessous de la roue arrière 3'. Le dessus et dessous est défini par rapport au sol sur lequel est disposé l'engin 1 de mobilité. Le dessous est la zone orientée vers le sol.

Ainsi, soit les moyens de support pivotants 100 sont positionnés et bloqués en rotation au-dessus de la roue arrière 3' [Fig. 1], soit les moyens de supports pivotants sont positionnés et bloqués en rotation au-dessous de la roue arrière 3' [fig. 2].

Dans la configuration où les moyens de support pivotants 100 sont positionnés et bloqués en rotation au-dessous de la roue arrière 3', ils sont en contact avec le sol, la roue arrière 3' n'est pas en contact avec le sol, l'entrainement de l'engin étant réalisé via la roue arrière 3', la mise en rotation par les pédales n'entraine plus la mobilité de l'engin 1. C'est-à-dire, que l'utilisateur en appuyant sur les pédales ne va pas faire avancer ou reculer l'engin de mobilité 1, qui va donc rester immobile.

Selon un mode de réalisation de l'invention, l'élément de fixation 101 est formé par une vis. Selon un mode de réalisation de l'invention, l'élément de fixation 101 est formé par un système du type excentrique de serrage.

Lors d'un premier mode d'utilisation de l'engin 1 de mobilité, par exemple en extérieure, les moyens de support sont positionnés et bloqués en rotation au-dessous de la roue arrière 3', l'engin 1 de mobilité est propulsé par la force motrice de l'utilisateur et par le moteur électrique. L'utilisateur accélère ou ralenti, il utilise le mode vitesse automatique ou pas.

Dans ce premier mode d'utilisation les moyens de support pivotants sont utilisés comme porte bagage, comme illustré figure 1, et permettent le transport d'élément 12 de type colis, bagage, siège enfant... ou tout autres éléments transportables sur un porte bagage d'un tel engin 1 de mobilité.

Ce mode d'utilisation utilise la puissance de la batterie, sans permettre sa recharge.

Lors d'un deuxième mode d'utilisation de l'engin 1 de mobilité, par exemple en intérieur, les moyens de support pivotants 100 sont positionnés et bloqués en rotation au-dessous de la roue arrière 3 [Fi. 2]. La roue arrière 3' de l'engin 1 n'est alors pas en contact avec le sol. L'entrainement de la roue arrière 3' par l'utilisateur ou par le moteur ne met ainsi pas en mouvement l'engin 1. L'engin est alors utilisé comme vélo d'intérieur et permet de faire des exercices sportifs.

Selon un mode de réalisation de ce deuxième mode d'utilisation, le moteur 2 est utilisé pour envoyer une force de résistance aux pédales. L'utilisateur pédale et doit exercer une force supérieure à celle envoyée par le moteur pour faire tourner l'axe de pédalier.

La force est réglée selon plusieurs modes de fonctionnement en fonction du besoin utilisateur et/ou de paramètres prédéfinis.

Dans ce mode d'utilisation, selon un mode de réalisation de l'invention, la pédale n'étant pas utilisée pour propulser l'engin 1, la puissance transmise par l'utilisateur en appuyant sur la pédale est utilisée pour recharger la batterie.

Pour cela, un couple inférieur à zéro est appliqué au moteur 2 électrique. Cela entraine une résistance pour l'utilisateur qui va alors entraîner le moteur en pédalant. L'énergie générée par l'utilisateur en pédalant est alors stockée dans la batterie. Cette énergie est ensuite utilisée, par exemple, pour le premier mode d'utilisation de l'engin 1 de mobilité.

Le stockage de l'énergie dans la batterie est réalisé par des moyens de stockage 61 via des câbles d'alimentation 62. Ainsi la batterie peut être rechargée soit via le câble d'alimentation 62 à partir d'une source d'énergie standard provenant du réseau électrique, soit via les câbles d'alimentations 62 à partir des moyens de stockage 61 de l'engin 1.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Engin de mobilité (1) fonctionnant à la fois avec un moteur (2) électrique et une force motrice musculaire transmise à un système de manivelle tournant autour d'un axe de pédalier (Xp) pour entraîner une roue (3, 3'), **caractérisé en ce qu'**il comporte des moyens de support pivotant (100).

2. Engin de mobilité (1) selon la revendication 1, dans lequel les moyens de support (100) sont formés par au moins un cadre de forme rectangulaire (101), duquel partent au moins 2 barres (102, 103) de fixation disposées de part et d'autres de la roue arrière (3'), les barres (102, 103) de fixation se prolongeant de façon à permettre la fixation des moyens de support (100) à un cadre (11) de l'engin (1) de mobilité.

3. Engin de mobilité (1) selon une des revendications 1ou 2, dans lequel les moyens de support (100) comportent 4 barres (102, 102', 103, 103') de fixations disposées 2 par 2 de part et d'autre de la roue arrière (3').

4. Engin de mobilité (1) selon une des revendications 1 à 3, dans lequel les barres sont fixées au cadre (11) de l'engin de mobilité au niveau du centre de la roue (3') arrière de façon à laisser la roue arrière (3') libre en rotation quel que soit la position des moyens de support pivotants (100).

5. Engin de mobilité (1) selon une des revendications 1 à 4, dans lequel les moyens de support pivotants (100) sont ainsi fixés au niveau du centre de la roue arrière (3'), de part et d'autre de la roue (3') par l'intermédiaire des barres de fixation.

6. Engin de mobilité (1) selon une des revendications 1 à 5, dans lequel la fixation entre les barres de fixation et le centre de la roue est réalisée avec un élément de fixation (101) permettant la rotation des moyens de support pivotant (100) autour de la roue arrière (3').

7. Engin de mobilité (1) selon une des revendications 1 à 7, dans lequel le moteur 2 est utilisé pour envoyer une force de résistance aux pédales.

8. Engin de mobilité (1) selon la revendication 7, dans lequel la force est réglée selon plusieurs modes de fonctionnement en fonction du besoin utilisateur et/ou de paramètres prédéfinis.

9. Engin de mobilité (1) selon une des revendications 1 à 8, dans lequel l'énergie générée par l'utilisateur en pédalant est stockée dans la batterie par des moyens de stockage (61) via des câbles d'alimentations.

10. Engin de mobilité (1), selon une des revendications 1 à 9, notamment engin de mobilité à assistance électrique, l'engin étant un vélo.
